# EUROPÄISCHE PATENTSCHRIFT

(11) **EP 3 593 099 B1**
(45) Veröffentlichungstag und Bekanntmachung des Hinweises auf die Patenterteilung: **26.01.2022**
(21) Anmeldenummer: 18707894.4
(22) Anmeldetag: 23.02.2018
(51) Int. Cl.: G01G 19/02

(54) **VERFAHREN ZUM BETREIBEN EINES FAHRZEUGEIGENEN WÄGESYSTEMS UND TACHOGRAPHSYSTEM MIT EINEM WÄGESYSTEM**
METHOD FOR OPERATING AN ON-BOARD WEIGHING SYSTEM, AND TACHOGRAPH SYSTEM COMPRISING A WEIGHING SYSTEM
PROCÉDÉ DE FONCTIONNEMENT D'UN SYSTÈME DE PESÉE EMBARQUÉ DANS UN VÉHICULE ET SYSTÈME TACHOGRAPHE POURVU D'UN SYSTÈME DE PESÉE

(30) Priorität: 09.03.2017 DE 102017203949
(43) Veröffentlichungstag der Anmeldung: 15.01.2020
(73) Patentinhaber: Continental Automotive GmbH, 30165 Hannover (DE)
(72) Erfinder: DOHMEN, Ralf, 78050 Villingen-Schwenningen (DE); BERTL, Svenja, 78147 Vöhrenbach (DE); WALKNER, Heiko, 78052 Villingen-Schwenningen (DE)
(74) Vertreter: Continental Corporation
(86) Internationale Anmeldenummer: PCT/EP2018/054561
(87) Internationale Veröffentlichungsnummer: WO 2018/162256

(56) Entgegenhaltungen:
- EP-A1- 0 218 466
- EP-A2- 2 889 591

## Beschreibung

Die Erfindung betrifft ein Verfahren zum Betreiben eines fahrzeugeigenen Wägesystems mit einem Sensor zum Messen einer Achslast eines Fahrzeugs. Die Erfindung betrifft weiterhin ein Tachographsystem, das dazu ausgebildet ist, das Verfahren durchzuführen.

Achslasten von Fahrzeugen, insbesondere von Nutzfahrzeugen, können mittels eines fahrzeugeigenen Wägesystems gemessen werden. Das Wägesystem kann dazu verschiedenartigen Sensoren aufweisen, die direkt im Fahrzeug verbaut sind.

Aus EP 0 218 466 A1 ist ein System zum Überwachen einer Last eines Straßenfahrzeugs bekannt. Das System umfasst einen Dehnungssensor zur Montage an einer Achse des Fahrzeugs.

EP 2 889 591 A2 offenbart ein Verfahren zum Bewerten eines Zustands einer Wägezelle einer Fahrzeugwaage mit mehreren Wägezellen. Die Fahrzeugwaage weist eine von einer Anzahl von Wägezellen getragene Waagenplattform zum Aufnehmen eines zu wiegenden Fahrzeugs auf.

Es ist wünschenswert, ein Verfahren zum Betreiben eines fahrzeugeigenen Wägesystems anzugeben, das einen sicheren Betrieb ermöglicht. Zudem ist es wünschenswert, ein Tachographsystem anzugeben, das sicher betreibbar ist.

Die Erfindung zeichnet sich aus durch ein Verfahren zum Betreiben eines fahrzeugeigenen Wägesystems mit einem Sensor zum Messen einer Achslast eines Fahrzeugs nach Anspruch sowie ein Tachographsystem nach Anspruch 8, das dazu ausgebildet ist, das Verfahren durchzuführen.

Gemäß einer Ausführungsform wird ein Spannungsverlauf einer an dem Sensor anliegenden elektrischen Betriebsspannung ermittelt. Eine Abweichung von einer vorgegebenen Betriebsspannung wird ermittelt. Wenn die Abweichung nach einem vorgegebenen Zeitraum noch vorliegt, wird ein Manipulationsversuch, den Sensor zu manipulieren, ermittelt.

Fahrzeuge, insbesondere Nutzfahrzeuge oder Lastkraftwagen beziehungsweise deren Anhänger, können mit einem fahrzeugeigenen Wägesystem (englisch: OnBoard Weighing System) ausgestattet sein. Das Wägesystem ermöglicht eine Bestimmung einer Achslast und damit beispielsweise einer Beladung des Fahrzeugs.

Der Sensor ist beispielsweise ein Drucksensor an einer luftgefederten Achse mit Luftfederbälgen. Dabei wird der Koeffizient aus Druck im Federbalg zur Querschnittsfläche als Gewichtskraft ermittelt. Alternativ oder zusätzlich ist der Sensor beispielsweise ein Niveausensor an einer blattgefederten Achse. Dabei wird aus der Federkennlinie mittels der gemessenen Einfederung die Gewichtskraft ermittelt. Alternativ oder zusätzlich ist der Sensor ein Dehnmessstreifen, der an der Achse des Fahrzeugs befestigt ist. Hierbei wird die Biegung der Achse bei Belastung durch den Sensor aufgenommen und in ein elektrisches Signal umgewandelt. Daraus kann das Gewicht ermittelt werden.

Durch eine geeignete Auslegung des elektronischen Systems mit dem Sensor wird ermöglicht, dass sich das Wägesystem bei der vorgegebenen Betriebsspannung spezifikationskonform verhält. Die vorgegebene Betriebsspannung ist insbesondere ein vorgegebener Betriebsspannungsbereich. Beispielsweise ist die vorgegebene Betriebsspannung 24 V. Alternativ ist die vorgegebene Betriebsspannung 12 V. Auch andere Betriebsspannungen können vorgegeben sein. Üblicherweise wird auch beschrieben, wie sich das System verhalten soll, wenn es außerhalb des Betriebsspannungsbereichs benutzt wird.

Beispielsweise wird das fahrzeugeigene Wägesystem genutzt, um achslastspezifische technische Funktionen abzuleiten. Beispielsweise ist es möglich, eine Reduzierung der Motorleistung vorzusehen, wenn eine hohe Achslast vorliegt. Eine Manipulation des Wägesystem kann darauf gerichtet sein, solche Funktionen auszuheben, beispielsweise um sich einen Vorteil zu verschaffen.

Anmeldungsgemäß ist es möglich, eine Manipulation zu detektieren, die durch ein bewusstes Variieren der Betriebsspannung erfolgt. Hierbei kann eine Über- oder Unterspannung für eine Manipulation genutzt werden, um den Sensor in einen nicht vorgesehenen Zustand zu bringen. Eine derartige Abweichung von der vorgegebenen Betriebsspannung wird ermittelt. Zudem wird ermittelt, ob die Abweichung nach einem vorgegebenen Zeitraum immer noch vorliegt. Die Abweichung von der vorgegebenen Betriebsspannung wird als Manipulationsversuch gewertet, wenn die Abweichung auch nach dem vorgegebenen Zeitraum noch vorliegt. Somit ist es möglich, kurzzeitige Abweichungen herauszufiltern, die nicht durch einen Manipulationsversuch verursacht werden sondern zum Beispiel durch Störungen im Bordnetz. Das Ermitteln des Spannungsverlaufs erfolgt beispielsweise mittels eines Analog/Digital-Wandlers, der die Betriebsspannung misst und dieser einer Auswertelogik zur Verfügung stellt.

Der vorgegebene Zeitraum ist beispielsweise eine halbe Minute lang, beispielsweise eine Minute lang, beispielsweise zwei Minuten lang oder 10 Minuten lang oder länger. Der vorgegebene Zeitraum kann auch kürzer sein. Der vorgegebene Zeitraum wird so vorgegeben, dass eine ausreichend sichere Unterscheidung zwischen einer Abweichung von der vorgegebenen Betriebsspannung aufgrund einer kurzen Störung oder eines Manipulationsversuchs möglich ist. Die Länge des Zeitraums wird beispielsweise in Abhängigkeit von Kenngrößen des elektronischen Bordnetzes des Fahrzeugs vorgegeben.

Gemäß Ausführungsformen wird ein Anstieg der Betriebsspannung über einen ersten vorgegebenen Schwellwert ermittelt. Ein Manipulationsversuch wird ermittelt, wenn der Anstieg der Betriebsspannung nach einem ersten vorgegebenen Zeitraum noch vorliegt. Der erste vorgegebene Schwellwert ist beispielsweise so hoch, dass der Sensor noch nicht vollständig beschädigt wird und nicht automatisch abgeschaltet wird. Der vorgegebene Schwellwert liegt jedoch beispielsweise außerhalb des vorgegebenen Betriebsspannungsbereichs. Der erste vorgegebene Zeitraum entspricht beispielsweise dem vorgegebenen Zeitraum. Somit ist es möglich, einen Manipulationsversuch zu ermitteln, auch wenn die Funktion des Sensors noch gegeben ist.

Gemäß weiteren Ausführungsformen wird ein Anstieg der Betriebsspannung über einen zweiten vorgegebenen Schwellwert ermittelt. Der zweite vorgegebene Schwellwert ist größer als der erste Schwellwert. Der Manipulationsversuch wird ermittelt, wenn der Anstieg der Betriebsspannung nach einem zweiten vorgegebenen Zeitraum noch vorliegt. Nachfolgend wird der Sensor deaktiviert. Der zweite vorgegebene Schwellwert ist so hoch, dass der Sensor sich abschaltet, um einen Defekt zu vermeiden. Das Abschalten des Sensors erfolgt jedoch erst, nachdem der Manipulationsversuch ermittelt wurde.

Gemäß weiteren Ausführungsformen wird ein Abfall der Betriebsspannung unter einen dritten vorgegebenen Schwellwert ermittelt. Der Manipulationsversuch wird ermittelt, wenn der Abfall der Betriebsspannung nach einem dritten vorgegebenen Zeitraum noch vorliegt. Der dritte vorgegebene Schwellwert ist insbesondere außerhalb des vorgegebenen Betriebsspannungsbereichs. Aufgrund des dritten vorgegebenen Zeitraums ist es möglich, verschiedene Ursachen einer Unterspannung zu unterscheiden. Beispielsweise ist es möglich, dass das Bordnetz abgeschaltet wird, zum Beispiel durch Zündung aus. Die zeitliche Verzögerung durch den dritten vorgegebenen Zeitraum ermöglicht eine Überprüfung nach der Verzögerung. Falls nach der Verzögerung das Bordnetz nicht spannungsfrei ist und die Unterspannung immer noch anliegt, liegt ein Manipulationsversuch vor.

Der erste, der zweite und der dritte Zeitraum sind gemäß Ausführungsformen gleich lang. Gemäß weiteren Ausführungsformen sind der erste, der zweite und der dritte Zeitraum jeweils unterschiedlich zueinander. Es ist auch möglich, dass zwei der drei Zeiträume gleichlang sind und der weitere Zeitraum unterschiedlich dazu ist. Insbesondere sind die drei Zeiträume jeweils eine halbe Minute lang oder länger, beispielsweise eine Minute, zwei Minuten oder 10 Minuten.

Gemäß Ausführungsforme wird der Manipulationsversuch in einem Fehlerspeicher gespeichert. Insbesondere wird der Manipulationsversuch in den Fehlerspeicher gespeichert, bevor der Sensor und/oder das Wägesystem zum Schutz vor einem Defekt abgeschaltet wird.

Das Tachographsystem für das das Fahrzeug ist dazu ausgebildet, ein anmeldungsgemäßes Verfahren nach zumindest einer Ausführungsform durchzuführen. Entsprechend sind sämtliche für das Verfahren offenbarten Merkmale auch für das System offenbart und umgekehrt.

Das Tachographsystem weist gemäß Ausführungsformen das Wägesystem mit dem Sensor zum Messen der Achslast des Fahrzeugs auf. Zudem weist das Tachographsystem eine Steuervorrichtung auf, die ausgebildet ist, den Spannungsverlauf zu ermitteln.

Insbesondere weist das Tachographsystem einen digitalen Tachographen auf. Die Steuervorrichtung ist beispielsweise Teil des digitalen Tachographen.

Ein digitaler Tachograph wird in Fahrzeugen beispielsweise verwendet, um Lenk- und Ruhezeiten, Lenkzeitunterbrechungen, zusätzlich gefahrene Kilometer und/oder eine gefahrene Geschwindigkeit aufzuzeichnen. Der digitale Tachograph weist beispielsweise eine Speichervorrichtung auf, insbesondere einen Fehlerspeicher. Zudem verfügt der Tachograph beispielsweise über Kommunikationsschnittstellen zum Auslesen des Fehlerspeichers und/oder zum Anzeigen der Messdaten des Wägesystems, insbesondere der gemessenen Achslast. Auch ein ermittelter Manipulationsversuch kann mittels des Tachographen angezeigt werden.

Weitere Vorteile, Merkmale und Weiterbildungen ergeben sich aus den nachfolgenden, in Verbindung mit den Figuren erläuterten Beispielen.

Es zeigen:
- Figur 1: eine schematische Darstellung eines Fahrzeugs gemäß einem Ausführungsbeispiel,
- Figur 2: eine schematische Darstellung eines Spannungsverlaufs gemäß einem Ausführungsbeispiel, und
- Figur 3: ein Ablaufdiagramm eines Verfahrens gemäß einem Ausführungsbeispiel.

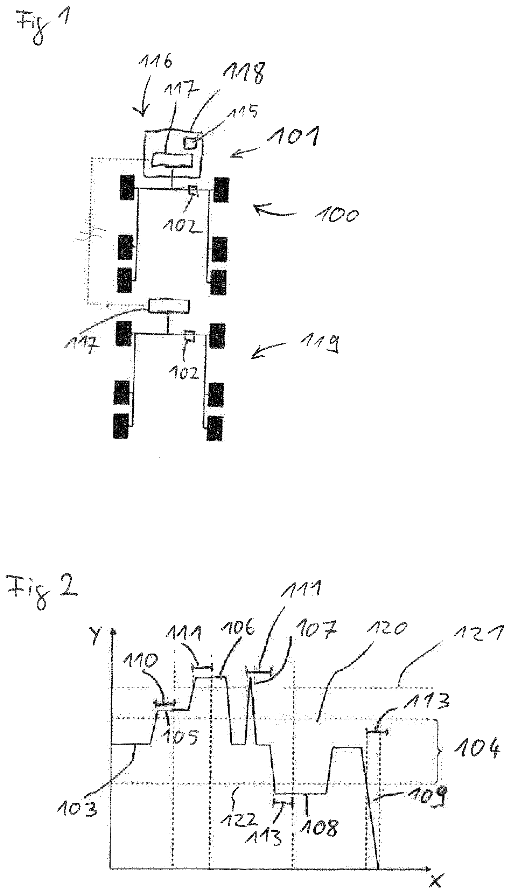

Figur 1 zeigt ein schematisch dargestelltes Fahrzeug 100. Das Fahrzeug ist gemäß dem dargestellten Ausführungsbeispiel mit einem Anhänger 119 ausgestattet. Gemäß weiteren Ausführungsbeispielen ist nur der Anhänger 119 beziehungsweise nur das Fahrzeug 100 mit einem anmeldungsgemäßen Wägesystem 101 ausgestattet.

Das Wägesystem 101 gemäß dem Ausführungsbeispiel der Figur 1 weist zwei Sensoren 102 zum Ermitteln einer Achslast auf. Es können auch mehr als zwei Sensoren vorgesehen sein. Ein Sensor 102 ist am Fahrzeug 100 angebracht zum Ermitteln zumindest einer Achslast des Fahrzeugs 100. Der andere Sensor 102 ist am Anhänger 119 angebracht zum Ermitteln der Achslast des Anhängers 119.

Am Fahrzeug 100 und am Anhänger 119 ist jeweils eine Steuervorrichtung 117 signaltechnisch mit dem jeweiligen Sensor 102 verbunden. Die Steuervorrichtungen 117 sind jeweils dazu ausgebildet, die Signale des jeweils zugeordneten Sensors 102 auszuwerten. Die Steuervorrichtungen 117 sind zudem jeweils dazu ausgebildet, einen Spannungsverlauf 103 (Figur 2) einer Betriebsspannung am Fahrzeug 100 beziehungsweise am Anhänger 119 zu ermitteln. Insbesondere wird der Spannungsverlauf 103 jeweils an dem Sensor 102 ermittelt.

Die Steuervorrichtung 117 des Fahrzeugs 100 ist gemäß dem dargestellten Ausführungsbeispiel Teil eines digitalen Tachographen 118. Der digitale Tachograph ist Teil eines Tachographsystems 116. Der digitale Tachograph 118 weist einen Fehlerspeicher 115 auf. Im Fehlerspeicher 115 werden beispielsweise Manipulationsversuche gespeichert, wie nachfolgend näher erläutert. Gemäß weiteren Ausführungsbeispielen ist die Steuervorrichtung 117 nicht Teil des Tachographen 118, sondern beispielsweise als eigenes Bauteil realisiert oder als Teil einer anderen im Fahrzeug 100 vorhandenen Einheit. Der Fehlerspeicher 115 ist gemäß weiteren Ausführungsbeispielen in den Sensor 102 integriert.

Die Steuervorrichtung 117 ist beispielsweise signaltechnisch mit dem digitalen Tachographen 118 gekoppelt. Somit können auch Daten beziehungsweise detektierte Manipulationsversuche am Anhänger 119 mittels des digitalen Tachographen 118 im Fahrzeug 100 angezeigt beziehungsweise gespeichert werden.

Mittels des im Fahrzeug 100 und/oder im Anhänger 119 integrierten fahrzeugeigenen Wägesystems 101 wird das Gewicht des Fahrzeugs 100 und des Anhängers 119 gemessen. Ein derartiges Wägesystem wird im Fahrzeug 100 und im Anhänger 119 benötigt, um die Achslast zu messen. Beispielsweise ist das Wägesystem 101 so ausgelegt, dass zyklische Messungen des Gewichts durchgeführt werden, sowohl bei Zündung an als auch bei Zündung aus.

Figur 2 zeigt den Spannungsverlauf 103 der Betriebsspannung 104 schematisch gemäß einem Ausführungsbeispiel. An der X-Achse der Figur 2 ist die Zeit aufgetragen. An der Y-Achse ist die Spannung aufgetragen.

Die Betriebsspannung 104 ist beispielsweise als Betriebsspannungsbereich vorgegeben, beispielsweise als Bereich um die vorgegebene Betriebsspannung von 24 V oder 12 V. Verläuft der Spannungsverlauf 103 innerhalb der vorgegebenen Betriebsspannung 104, wird von einem bestimmungsgemäßen Betrieb des Wägesystems 101 und insbesondere des Sensors 102 ohne Manipulationsversuche ausgegangen.

Ein erster Schwellwert 120 ist vorgegeben, der den vorgegebenen Betriebsspannungsbereich nach oben begrenzt. Nach unten ist der vorgegebene Betriebsspannungsbereich durch einen dritten Schwellwert 122 begrenzt. Ein zweiter Schwellwert 121 ist vorgegeben, der größer ist als der erste Schwellwert 120. Beispielsweise ist die vorgegebene Betriebsspannung 24 V, der erste Schwellwert 120 bei 36 V, der zweite Schwellwert 121 bei 48 V und der dritte Schwellwert 122 bei 18 Volt. Beispielsweise ist der erste Schwellwert 120 um den Faktor 1,5 größer als die vorgegebene Betriebsspannung. Beispielsweise ist der zweite Schwellwert 121 um den Faktor 2 größer als die vorgegebene Betriebsspannung. Beispielsweise ist der dritte Schwellwert 122 um den Faktor 0,75 kleiner als die vorgegebene Betriebsspannung.

Nachfolgend werden unterschiedliche Abweichungen von der vorgegebenen Betriebsspannung 104 beispielhaft erläutert.

Eine erste Abweichung 105 über den ersten Schwellwert 120 jedoch unter dem zweiten Schwellwert 121 tritt auf. Beispielsweise ist zur Manipulationserkennung für eine derartige Abweichung ein erster Zeitraum 110 vorgegeben. Da die Abweichung 105 auch nach Ablauf des ersten Zeitraums 110 noch vorliegt, wird von einem Manipulationsversuch ausgegangen. Eine Überspannung wurde detektiert, die auch nach dem ersten Zeitraum 110 noch vorliegt. Die Überspannung ist jedoch gering genug, dass die Funktion des Sensors noch gegeben ist. Jedoch liefert der Sensor 102 beispielsweise nicht mehr exakte Messungen des Lastsystems, sondern eine geringere Achslast als die tatsächliche Achslast. Beispielsweise wird der Manipulationsversuch im Fehlerspeicher 15 des digitalen Tachographen 118 gespeichert.

Eine zweite Abweichung 106 wird ermittelt, die eine Überspannung größer als der zweite Schwellwert 121 darstellt. Auch die Abweichung 106 liegt nach einem für derartige Abweichungen vorgegebenen Zeitraum 111 noch vor. Somit wird ein Manipulationsversuch ermittelt. Die Überspannung wird detektiert und der Manipulationsversuch beispielsweise im Fehlerspeicher 115 abgespeichert. Da die Überspannung höher ist als der zweite Schwellwert 121, wird der Sensor 102 abgeschaltet, um einem Defekt vorzubeugen. Jedoch wird der Sensor erst nach dem Abspeichern des Manipulationsversuchs im Fehlerspeicher 115 abgeschaltet.

Eine weitere Abweichung 107 über den ersten Schwellwert 120 und/oder dem zweiten Schwellwert 121 wird ermittelt. Die Abweichung 107 ist jedoch kürzer als der zugeordnete Zeitraum 111 beziehungsweise 110. Somit wird nicht von einem Manipulationsversuch ausgegangen. Beispielsweise ist die Abweichung 107 durch eine andere Störung wie einen ESD-Puls (elektrostatische Entladung) verursacht. Solche Störungen sind zeitlich deutlich kürzer als Manipulationsversuche. Daher ermöglicht das anmeldungsgemäße Verfahren eine Unterscheidung der Abweichungen 105 und 106, die durch einen Manipulationsversuch verursacht werden, von der Abweichung 107, die durch eine andersartige Störung verursacht ist.

Eine weitere Abweichung 108 unter den dritten Schwellwert 122 stellt eine Unterspannung dar. Auch dieser Abweichung 108 ist ein Zeitraum 113 vorgegeben. Da die Abweichung 108 auch nach dem vorgegebenen Zeitraum 113 noch vorliegt, wird von einem Manipulationsversuch ausgegangen. Im Unterschied zu einer Abweichung 109, die aufgrund einer Abschaltung des Bordnetzes, zum Beispiel durch Zündung aus, entsteht, ist bei der Abweichung 108 nach Ablauf des vorgegebenen Zeitraums 113 das Bordnetz nicht spannungsfrei. Beim Abschalten des Bordnetzes und der daraus resultierenden Abweichung 109 wird kein Manipulationsversuch ermittelt, da die zeitliche Verzögerung in Form eines Filters mittels des Zeitraums 113 zur fehlerfreien Detektion einer Unterspannung vorgesehen ist. Wenn die Unterspannung auch nach dem Zeitraum 113 noch vorliegt, wird beispielsweise ein Manipulationsversuch im Fehlerspeicher 115 gespeichert.

Ein erneutes Ermitteln eines Manipulationsversuchs aufgrund zumindest einer der Abweichungen 105, 106 und/oder 108 wird erst dann erfolgen, wenn der zu diesem Manipulationsversuch zugehörige Spannungsbereich für einen vorgegebenen Zeitraum wieder verlassen wurde.

Zudem ist es möglich, einen Manipulationsversuch von einer schwächer werdenden Batterie zu unterscheiden. Eine derartige Unterscheidung ist insbesondere im digitalen Tachographen 118 implementiert.

Die unterschiedlichen Abweichungen lösen gemäß Ausführungsbeispielen so genannte Events aus. Die erste Abweichung 105 stellt ein Eintreten des Spannungsverlaufs 103 in einen überhöhten Spannungsbereich dar. Ein zugehöriger Event wird nach dem ersten Zeitraum 110 ausgelöst. Die zweite Abweichung 106 stellt ein Eintreten des Spannungsverlaufs 103 in einen stark überhöhten Spannungsbereich dar. Ein zugehöriger Event wird nach dem zweiten Zeitraum 111 ausgelöst. Die weitere Abweichung 108 unter den dritten Schwellwert 122 stellt ein Eintreten des Spannungsverlaufs 103 in einen Niederspannungsbereich dar. Ein zugehöriger Event wird nach dem dritten Zeitraum 113 ausgelöst. Allgemein wird ein Event nur ausgelöst, wenn die Überspannung oder Unterspannung nach dem jeweiligen Zeitraum noch vorliegt. Der Event wird jeweils mit einem Zeitstempel versehen. Der Zeitstempel umfasst beispielsweise Informationen, zu welcher Uhrzeit und an welchem Datum der Eintritt in den überhöhten Spannungsbereich oder den Niederspannungsbereich erfolgt ist. Wenn der Spannungsverlauf 103 wieder in den Betriebsspannungsbereich 104 zurückkehrt oder von dem stark überhöhten Spannungsbereich in den überhöhten Spannungsbereich zurücckehrt, wird dem Event beispielsweise ein weiterer Zeitstempel zugewiesen.

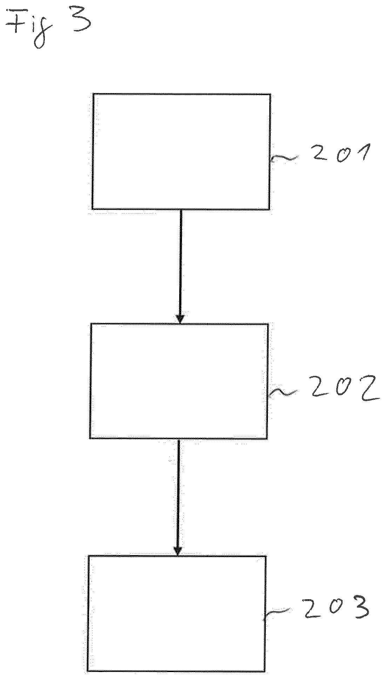

Figur 3 zeigt ein Ablaufdiagramm des anmeldungsgemäßen Verfahrens gemäß einem Ausführungsbeispiel. Im Schritt 201 wird mittels des Sensors 102 der Spannungsverlauf 103 der an dem Betrieb anliegenden elektrischen Betriebsspannung 104 ermittelt.

Nachfolgend wird in Schritt 202 eine oder mehrere der Abweichungen 105, 106, 107, 108 und 109 von der vorgegebenen Betriebsspannung 104 ermittelt.

Wenn zumindest eine der Abweichungen 105, 106 und 108 auch nach dem zugehörigen vorgegebenen Zeitraum 110, 111 und 113 noch vorliegt, wird in Schritt 203 ein Manipulationsversuch ermittelt. Der Manipulationsversuch dient insbesondere dazu, den Sensor 102 zu manipulieren. Beispielsweise dient der Manipulationsversuch dazu, die Messdaten des Sensors abzuändern, sodass beispielsweise weniger Gewicht als tatsächlich ausgegeben wird. Alternativ oder zusätzlich wird durch den Manipulationsversuch versucht, den Sensor so zu stören, dass er keine Messdaten mehr liefert.

Im Fahrzeug 100 und/oder im Anhänger 119 ist mindestens ein fahrzeugeigenes Wägesystem 101 verbaut, das das Fahrzeuggewicht misst. Über die Steuervorrichtung 117 (englisch: electrical control unit, ECU) werden die Daten einem Erfassungs- und Aufzeichnungsgerät zur Verfügung gestellt, beispielsweise dem digitalen Tachographen 118. Der digitale Tachograph 118 wertet die Daten aus und kann bei einem Manipulationsversuch einen Alarm auslösen. Darüber hinaus kann der digitale Tachograph Ereignisse und Daten sicher speichern sowie anderen Geräten zur Verfügung stellen, die dann weitere Aktionen auslösen.

Beispielsweise wird mit der Einführung eines Gesetzes zur Achslastkontrolle mittels eines fahrzeugeigenen Wägesystems 101 bei jedem neuen Lastkraftwagen 100 ein solches Messsystem integriert. Die Möglichkeit einer Nachrüstung vorhandener Fahrzeuge ist ebenfalls gegeben, beispielsweise auch ohne gesetzliche Grundlage. Die Anzeige und Speicherung der Daten des Wägesystems 101 erfolgt beispielsweise mit dem bereits im Fahrzeug 100 integrierten digitalen Tachographen 118. Dieser digitale Tachograph 118 stellt die Daten beispielsweise auch einem übergeordneten Steuergerät beispielsweise in einer Werkstatt zur Verfügung oder übermittelt diese beispielsweise schon während der Fahrt über ein Mobilfunknetz.

Das anmeldungsgemäße Verfahren ermöglicht ein Detektieren einer potentiellen Manipulation des Wägesystems 101 durch Überspannungen und Unterspannungen. Somit wird ein sicherer Betrieb ermöglicht.

## Patentansprüche

1. Verfahren zum Betreiben eines fahrzeugeigenen Wägesystems (101) mit einem Sensor (102) zum Messen einer Achslast eines Fahrzeugs (100, 119), **gekennzeichnet durch**
- Ermitteln eines Spannungsverlaufs (103) einer an dem Sensor anliegenden elektrischen Betriebsspannung,
- Ermitteln einer Abweichung (105, 106, 107, 108, 109) von einer vorgegebenen Betriebsspannung (104),
- und, wenn die Abweichung (105, 106, 108) nach einem vorgegebenen Zeitraum (110, 111, 113) noch vorliegt, Ermitteln eines Manipulationsversuchs, den Sensor (102) zu manipulieren.

2. Verfahren nach Anspruch 1, umfassend:
- Ermitteln eines Anstiegs (105) der Betriebsspannung über einen ersten vorgegebenen Schwellwert (120),
- Ermitteln des Manipulationsversuchs, wenn der Anstieg (105) der Betriebsspannung nach einem ersten vorgegebenen Zeitraum (110) noch vorliegt.

3. Verfahren nach Anspruch 1 oder 2, umfassend:
- Ermitteln eines Anstiegs (106) der Betriebsspannung über einen zweiten vorgegebenen Schwellwert (121), der größer ist als der erste Schwellwert (120),
- Ermitteln des Manipulationsversuchs, wenn der Anstieg (106) der Betriebsspannung nach einem zweiten vorgegebenen Zeitraum (111) noch vorliegt, und nachfolgend
- Deaktivieren des Sensors (102).

4. Verfahren nach einem der Ansprüche 1 bis 3, umfassend:
- Ermitteln eines Abfalls (108) der Betriebsspannung unter einen dritten vorgegebenen Schwellwert (122),
- Ermitteln des Manipulationsversuchs, wenn der Abfall (108) der Betriebsspannung nach einem dritten vorgegebenen Zeitraum (113) noch vorliegt.

5. Verfahren nach einem der Ansprüche 2 bis 4, bei dem der erste (110) und/oder der zweite (111) und/oder der dritte (113) Zeitraum jeweils eine halbe Minute lang oder länger ist.

6. Verfahren nach einem der Ansprüche 2 bis 5, bei dem der erste (110) und/oder der zweite (111) und/oder der dritte (113) Zeitraum unterschiedlich lang sind.

7. Verfahren nach einem der Ansprüche 1 bis 6, umfassend:
- Speichern des Manipulationsversuchs in einem Fehlerspeicher (115).

8. Tachographsystem für ein Fahrzeug (100, 119), welches Tachographsystem (116) dazu ausgebildet ist, ein Verfahren nach einem der Ansprüche 1 bis 7 durchzuführen.

9. Tachographsystem nach Anspruch 8, aufweisend:
- das Wägesystem (101) mit dem Sensor (102) zum Messen der Achslast des Fahrzeugs (100, 119),
- eine Steuervorrichtung (117), die ausgebildet ist, den Spannungsverlauf (103) zu ermitteln.

10. Tachographsystem nach Anspruch 9, aufweisend:
- einen digitalen Tachographen (118), wobei die Steuervorrichtung (117) Teil des digitalen Tachographen (118) ist.

## Claims

1. Method for operating a vehicle on-board weighing system (101) having a sensor (102) for measuring an axle load of a vehicle (100, 119), **characterized by**
- ascertaining a voltage profile (103) of an operating voltage present at the sensor,
- ascertaining a deviation (105, 106, 107, 108, 109) from a predefined operating voltage (104),
- and, if the deviation (105, 106, 108) is still present after a predefined time interval (110, 111, 113), ascertaining a manipulation attempt to manipulate the sensor (102).

2. Method according to Claim 1, comprising:
- ascertaining a rise (105) in the operating voltage above a first predefined threshold value (120),
- ascertaining the manipulation attempt when the rise (105) in the operating voltage is still present after a first predefined time interval (110).

3. Method according to Claim 1 or 2, comprising:
- ascertaining a rise (106) in the operating voltage above a second predefined threshold value (121) that is greater than the first threshold value (120),
- ascertaining the manipulation attempt when the rise (106) in the operating voltage is still present after a second predefined time interval (111), and then
- deactivating the sensor (102).

4. Method according to one of Claims 1 to 3, comprising:
- ascertaining a drop (108) in the operating voltage below a third predefined threshold value (122),
- ascertaining the manipulation attempt when the drop (108) in the operating voltage is still present after a third predefined time interval (113).

5. Method according to one of Claims 2 to 4, in which the first (110) and/or the second (111) and/or the third (113) time interval is in each case half a minute long or longer.

6. Method according to one of Claims 2 to 5, in which the first (110) and/or the second (111) and/or the third (113) time interval are of different lengths.

7. Method according to one of Claims 1 to 6, comprising:
- storing the manipulation attempt in an error memory (115).

8. Tachograph system for a vehicle (100, 119), which tachograph system (116) is designed to perform a method according to one of Claims 1 to 7.

9. Tachograph system according to Claim 8, comprising:
- the weighing system (101) having the sensor (102) for measuring the axle load of the vehicle (100, 119),
- a control device (117) that is designed to ascertain the voltage profile (103).

10. Tachograph system according to Claim 9, comprising:
- a digital tachograph (118), wherein the control device (117) is part of the digital tachograph (118).

## Revendications

1. Procédé de fonctionnement d'un système de pesage (101), propre à un véhicule, comprenant un capteur (102) destiné à mesurer une charge par essieu d'un véhicule (100, 119), **caractérisé par** les étapes suivantes
- déterminer une courbe de tension (103) d'une tension de fonctionnement électrique appliquée au capteur,
- déterminer un écart (105, 106, 107, 108, 109) par rapport à une tension de fonctionnement spécifiée (104),
- et, si l'écart (105, 106, 108) est toujours présent au bout d'un laps de temps spécifié (110, 111, 113), déterminer une tentative de manipulation du capteur (102) .

2. Procédé selon la revendication 1, comprenant les étapes suivantes :
- déterminer une augmentation (105) de la tension de fonctionnement au-dessus d'une première valeur seuil spécifiée (120),
- déterminer la tentative de manipulation lorsque l'augmentation (105) de la tension de fonctionnement est toujours présente au bout d'un premier laps de temps spécifié (110).

3. Procédé selon la revendication 1 ou 2, comprenant les étapes suivantes :
- déterminer une augmentation (106) de la tension de fonctionnement au-dessus d'une deuxième valeur seuil spécifiée (121) qui est supérieure à la première valeur seuil (120),
- déterminer la tentative de manipulation si l'augmentation (106) de la tension de fonctionnement est toujours présente au bout d'un deuxième laps de temps spécifié (111), et ensuite
- désactiver le capteur (102).

4. Procédé selon l'une quelconque des revendications 1 à 3, comprenant les étapes suivantes :
- déterminer une diminution (108) de la tension de fonctionnement au-dessous d'une troisième valeur seuil spécifiée (122),
- déterminer la tentative de manipulation si la diminution (108) de la tension de fonctionnement est encore présente au bout d'un troisième laps de temps spécifié (113).

5. Procédé selon l'une des revendications 2 à 4, dans lequel le premier (110) et/ou le deuxième (111) et/ou le troisième (113) laps de temps durent chacun une demiminute ou plus.

6. Procédé selon l'une des revendications 2 à 5, dans lequel le premier (110) et/ou le deuxième (111) et/ou le troisième (113) laps de temps ont des durées différentes.

7. Procédé selon l'une des revendications 1 à 6, comprenant l'étape suivante :
- mémoriser la tentative de manipulation dans une mémoire d'erreur (115).

8. Système de tachygraphie pour véhicule (100, 119), lequel système de tachygraphie (116) est conçu pour mettre en œuvre un procédé selon l'une des revendications 1 à 7.

9. Système de tachygraphie selon la revendication 8, comprenant :
- le système de pesée (101) muni du capteur (102) destiné à mesurer la charge par essieu du véhicule (100, 119),
- un dispositif de commande (117) qui est conçu pour déterminer la courbe de tension (103).

10. Système de tachygraphie selon la revendication 9, comprenant :
- un tachygraphe numérique (118), le dispositif de commande (117) faisant partie du tachygraphe numérique (118) .
